# EUROPÄISCHE PATENTSCHRIFT

(11) **EP 3 913 261 B1**
(45) Veröffentlichungstag und Bekanntmachung des Hinweises auf die Patenterteilung: **11.09.2024**
(21) Anmeldenummer: 21174643.3
(22) Anmeldetag: 19.05.2021
(51) Int. Cl.: F16H 57/023, F16D 1/08, H02K 7/00, H02K 7/116, F16H 57/02

(54) **ANKOPPELVORRICHTUNG ZUM DREHMOMENT-ÜBERTRAGENDEN ANKOPPELN EINER ANTRIEBSVORRICHTUNG AN EIN GETRIEBE**
COUPLING DEVICE FOR TORQUE-TRANSMITTING COUPLING OF A DRIVE DEVICE TO A TRANSMISSION
DISPOSITIF DE COUPLAGE POUR LA TRANSMISSION DE COUPLE D'UN DISPOSITIF D'ENTRAÎNEMENT À UNE TRANSMISSION

(30) Priorität: 20.05.2020 LU 101812
(43) Veröffentlichungstag der Anmeldung: 24.11.2021
(73) Patentinhaber: Nabtesco Precision Europe GmbH, 40472 Düsseldorf (DE)
(72) Erfinder: Pawliszak, Marco, 45525 Hattingen (DE); Henzel, Ruslan, 40878 Ratingen (DE)
(74) Vertreter: Hoffmann, Jürgen

(56) Entgegenhaltungen:
- CN-A- 105 840 791
- DE-A1- 102018 204 200
- DE-A1- 102019 003 546
- ANONYMOUS: "Geschlitzte Klemmringe aus Aluminium | MÄDLER Webshop", 2 January 2020 (2020-01-02), XP055841432, Retrieved from the Internet <URL:https://web.archive.org/web/20200102080056/https://maedler.de/product/1643/1625/geschlitzte-klemmringe-aus-aluminium> [retrieved on 20210915]

## Beschreibung

Die Erfindung betrifft eine Ankoppelvorrichtung zum drehmomentübertragenden Ankoppeln einer drehmomenteinspeisenden Antriebsvorrichtung, insbesondere eines Antriebsmotors, die eine Abtriebswelle aufweist, an ein Getriebe, insbesondere an ein Zykloidgetriebe, wobei die Ankoppelvorrichtung ein Ankoppelvorrichtungsgehäuse zur drehmomentabstützenden Verbindung eines Getriebe-Drehmomentabstützelements, insbesondere eines Getriebegehäuses, des Getriebes mit einem Antriebs-Drehmomentabstützelement der Antriebsvorrichtung, insbesondere einem Antriebsgehäuse, sowie eine innerhalb des Ankoppelvorrichtungsgehäuses rotierbar gelagerte Übertragungswelle mit einem Antriebsende aufweist, das dazu ausgebildet und bestimmt ist, mit einem Endabschnitt einer Abtriebswelle einer drehmomenteinspeisenden Antriebsvorrichtung drehfest verbunden zu werden, wobei die gesamte Ankoppelvorrichtung als fertig montierte und funktionsfähige Baueinheit an eine drehmomenteinspeisende Antriebsvorrichtung ankoppelbar ist, ohne hierfür Teile der Ankoppelvorrichtung demontieren zu müssen, wobei das Antriebsende als eine geschlitzte Hohlwelle mit einer axialen Bohrung ausgebildet ist und dazu ausgebildet ist, kraftschlüssig, insbesondere ausschließlich kraftschlüssig, mit der Abtriebswelle einer drehmomenteinspeisenden Antriebsvorrichtung verbunden zu werden, und dass die Ankoppelvorrichtung einen Klemmring mit einer tangential verlaufenden Spannschraube aufweist, der an dem Antriebsende angeordnet ist und mittels dem der Durchmesser der axialen Bohrung verringerbar ist.

Ankoppelvorrichtungen dieser Art dienen dazu, gemeinsam mit einem Getriebe ein Getriebesystem zu bilden, um im Ergebnis eine drehmomenteinspeisende Antriebsvorrichtung, beispielsweise einem Antriebsmotor, an ein anzutreibendes System anzukoppeln. Hierbei muss einerseits eine Abtriebswelle der Antriebsvorrichtung mit einem Eingang des anzutreibenden Systems wirkverbunden werden und muss außerdem zusätzlich eine drehmomentabstützende Verbindung eines Antriebs-Drehmomentabstützelements der Antriebsvorrichtung, beispielsweise eines Antriebsgehäuses eines Antriebsmotors, zu einem Drehmomentabstützelement des anzutreibenden Systems (zumeist ein Gehäuse oder eine Halterung) hergestellt werden.

Aus DE 10 2019 003 546 A1 ist ein Adapter für einen Antrieb, welcher einen Elektromotor mit Motorwelle, insbesondere Rotorwelle, und ein Getriebe aufweist. Der Adapter weist ein Gehäuseteil, eine Adapterwelle mit Ringbuchsenteil, ein erstes und ein zweites Lager, ein Kupplungsteil, in welche die Motorwelle einsteckbar ist, einen Klemmring mit einer radial gerichteten Gewindebohrung, einen Gewindestift und ein Ringteil auf. Das erste und das zweite Lager sind im Gehäuseteil aufgenommen, wobei die Adapterwelle mit Ringbuchsenteil mittels des ersten und zweiten Lagers drehbar gelagert ist und wobei das Kupplungsteil formschlüssig der Adapterwelle verbunden ist und wobei das Ringteil im Gehäuseteil aufgenommen ist oder als Flanschteil mit dem Gehäuseteil den Lagersitz des zweiten Lagers bildend verbunden ist und wobei der Gewindestift zumindest teilweise in die Radialbohrung des Klemmrings eingeschraubt ist und in eine erste Bohrung, insbesondere radial durch das Ringteil durchgehende Bohrung, des Ringteils derart teilweise hineinragt, dass der von dem Gewindestift überdeckte Radialabstandsbereich sowohl mit dem von dem Ringteil als auch mit dem von dem Klemmring überdeckten Radialabstandsbereiche überlappt. DE 10 2018 204200 A1 offenbart eine Ankoppelvorrichtung.

Es ist die Aufgabe der vorliegenden Erfindung, eine Ankoppelvorrichtung anzugeben, die fehlerunanfällig und sicher an eine drehmomenteinspeisende Antriebsvorrichtung ankoppelbar ist.

Die Aufgabe wird durch eine Ankoppelvorrichtung gelöst, die dadurch gekennzeichnet ist, dass der Klemmring einen einteiligen geschlitzten Ring aufweist, dessen freie Enden mittels der Spannschraube einander annäherbar sind und der aus Aluminium oder aus einer Aluminiumlegierung hergestellt ist und/oder der überwiegend aus Aluminium besteht und dass das Antriebsende dazu ausgebildet und bestimmt ist, mit einer Abtriebswelle einer drehmomenteinspeisenden Antriebsvorrichtung, die einen Durchmesser von x mm aufweist, drehfest verbunden zu werden und dass in die axiale Bohrung eine Ausgleichshülse der Wanddicke y mm eingesteckt ist, in die die Abtriebswelle unmittelbar einsteckbar ist, wobei die axiale Bohrung einen Durchmesser im Bereich von x+y+2/100 mm bis x+y+8/100 mm aufweist. Insbesondere kann vorteilhaft vorgesehen sein, dass eine drehstarre, koaxiale Verbindung der Übertragungswelle mit der Abtriebswelle einer drehmomenteinspeisenden Antriebsvorrichtung herstellbar ist, ohne hierfür Teile der Ankoppelvorrichtung demontieren zu müssen.

Die Erfindung hat den ganz besonderen Vorteil, dass die gesamte Ankoppelvorrichtung als eigenständige, vom Hersteller fertig zusammengebaute und hinsichtlich einer ordnungsgemäßen Funktionsfähigkeit getestete Baueinheit vom Verwender mit einer drehmomenteinspeisenden Antriebsvorrichtung gekoppelt werden kann. Insbesondere ist es vorteilhaft nicht notwendig, die Ankoppelvorrichtung für das Ankoppeln an eine drehmomenteinspeisende Antriebsvorrichtung zu zerlegen, was zum einen den Montagevorgang an sich vereinfacht und darüber hinaus gewährleistet, dass die Ankoppelvorrichtung in dem Zustand zum Einsatz kommt, in dem sie (vorzugsweise als Teil eines fertig montierten Getriebesystems, das eine erfindungsgemäße Ankoppelvorrichtung und ein Getriebe aufweist) hinsichtlich ihrer Funktionsfähigkeit, insbesondere unmittelbar nach ihrer Herstellung, getestet wurde.

Bei einer ganz besonders vorteilhaften Ausführung ist das Antriebsende dazu ausgebildet, kraftschlüssig (= reibschlüssig), insbesondere ausschließlich kraftschlüssig, mit der Abtriebswelle einer drehmomenteinspeisenden Antriebsvorrichtung verbunden zu werden. Diese Ausführung hat insbesondere den ganz besonderen Vorteil, dass die zumeist kreiszylinderförmig ausgebildeten Abtriebswellen üblicher Antriebsmotore unmittelbar angekoppelt werden können. Anders als beispielsweise bei einer formschlüssigen Steckverbindung ist außerdem die Gefahr eines ungewollten Verklemmens vermieden. Eine, insbesondere ausschließlich, kraftschlüssige Verbindung des Antriebsendes mit der Abtriebswelle einer drehmomenteinspeisenden Antriebsvorrichtung kann insbesondere dadurch erreicht werden, dass der Durchmesser der axialen Bohrung in die die Abtriebswelle einer drehmomenteinspeisenden Antriebsvorrichtung eingesteckt ist, mittels des Klemmrings verringert wird, wodurch die Abtriebswelle der drehmomenteinspeisenden Antriebsvorrichtung eingeklemmt wird.

Insbesondere kann das Antriebsende als eine geschlitzte Hohlwelle mit einer axialen Bohrung ausgebildet sein. Vorzugsweise liegt die Differenz des Außendurchmessers des Antriebsendes zu dem Durchmesser der axialen Bohrung im Bereich von 3 mm bis 5 mm. Hierdurch ist sowohl eine ausreichende Torsionssteifigkeit, als auch eine zuverlässige drehfeste Klemmverbindung ermöglicht.

Bei einer vorteilhaften Ausführung weist das Antriebsende wenigstens zwei axial verlaufende Schlitze auf. Insbesondere kann das Antriebsende genau zwei axial verlaufende Schlitze aufweisen, die einander radial gegenüberliegend angeordnet sind. Eine solche Ausführung ist besonders vorteilhaft im Hinblick auf eine unwuchtfreie Rotation der Übertragungswelle, wobei dennoch gleichzeitig eine zuverlässige drehfeste Klemmverbindung ermöglicht ist. Hierfür kann vorteilhaft alternativ oder zusätzlich insbesondere vorgesehen sein, dass die Schlitze axial genauso lang sind, wie die axiale Bohrung.

Erfindungsgemäß ist das Antriebsende dazu ausgebildet und bestimmt, mit einer Abtriebswelle einer drehmomenteinspeisenden Antriebsvorrichtung, die einen Durchmesser von x mm aufweist, drehfest verbunden zu werden, wobei in die axiale Bohrung eine Ausgleichshülse der Wanddicke y mm eingesteckt ist, in die die Abtriebswelle unmittelbar einsteckbar ist, wobei die axiale Bohrung (vor dem Festklemmen, insbesondere vor dem Verringern des Durchmessers beispielsweise mittels eines Klemmrings) einen Durchmesser im Bereich von x+y+2/100 mm bis x+y+8/100 mm aufweist.

Vorzugsweise liegt x im Bereich von 5 mm bis 50 mm, insbesondere im Bereich von 9 mm bis 38 mm. Insbesondere kann x einen der Werte 9 mm, 14 mm, 19 mm, 24 mm, 38 mm aufweisen. Vorzugsweise liegt y im Bereich von 1 mm bis 5 mm, insbesondere im Bereich von 2 mm bis 4 mm.

In erfindungsgemäßer Weise wurde erkannt, dass eine Klemmverbindung, die besonders hohe Drehmomente übertragen kann, insbesondere dann gewährleistet ist, wenn das Gesamtpassungsspiel aller Beteiligten Komponenten (Abtriebswelle, axiale Bohrung und ggf. Ausgleichshülse) im Bereich von 2/100 mm bis 8/100 mm liegt. Das Passungsspiel bezieht sich auf einen möglichen Luftspalt in Radialrichtung (vor dem Festklemmen, insbesondere vor dem Verringern des Durchmessers beispielsweise mittels eines Klemmrings). Wenn das Gesamtpassungsspiel größer ist als 8/100, fällt das übertragbare Drehmoment sehr deutlich ab. Ein Gesamtpassungsspiel das kleiner ist als 2/100 mm ist zwar in Bezug auf das übertragbare Drehmoment zumindest nicht nachteilig, allerdings ist dann eine Montage nicht mehr einfach möglich, weil die Einzelteile (Ausgleichshülse in axiale Bohrung und Abtriebswelle in die Ausgleichshülse) nicht mehr einfach ineinander gesteckt werden können, bevor die Klemmschraube des Klemmrings angezogen wird.

In erfindungsgemäßer Weise wurde außerdem erkannt, dass es im Hinblick auf den oben genannten Bereich (2/100 mm 8/100 mm) nicht auf den Durchmesser der Abtriebswelle ankommt. Vielmehr gilt dieser Bereich weitgehend unabhängig von dem Durchmesser der Abtriebswelle; zumindest, wenn dieser im Bereich von 5 mm bis 50 mm liegt.

Bei einer ganz besonders verkraften Ausführung weist die Übertragungswelle auf ihrer Außenseite eine umlaufende Nut auf. Insbesondere kann die umlaufende Nut axial angrenzend an die Schlitze angeordnet sein. Es ist beispielweise auch möglich, dass die Schlitze axial in die umlaufende Nut ragen oder axial vollständig durch die Nut hindurch verlaufen. Insbesondere kann vorteilhaft vorgesehen sein, dass die axial verlaufenden Schlitze am freien Ende der Übertragungswelle beginnen und am tiefsten Punkt der Nut enden. Alternativ kann beispielsweise auch vorgesehen sein, dass die axial verlaufenden Schlitze am freien Ende der Übertragungswelle beginnen, vollständig durch die Nut und dann enden. Die Nut hat den ganz besonderen Vorteil, dass die Abschnitte des Antriebsendes der Übertragungswelle, beispielsweise mittels eines Klemmrings, besonders gut an die Abtriebswelle angelegt werden können.

Bei einer einfachen Ausführung ist die umlaufende Nut im Querschnitt halbkreisförmig ausgebildet.

Bei einer ganz besonders vorteilhaften Ausführung, die eine besonders sichere Klemmverbindung ermöglicht, weist die umlaufende Nut im Querschnitt eine relativ zur Radialrichtung in einem von Null Grad verschiedenen Winkel verlaufende, insbesondere gerade, Flanke auf. Der Winkel kann insbesondere im Bereich von 50 Grad bis 70 Grad liegen. Besonders vorteilhaft ist es, wenn der Winkel 60 Grad beträgt.

Insbesondere kann die umlaufende Nut im Querschnitt eine weitere, gebogene, insbesondere konkav gebogene, Flanke aufweisen.

Bei einer vorteilhaften Ausführung weist die umlaufende Nut eine radiale Tiefe im Bereich von 1 mm bis 4 mm, insbesondere von 2 mm, auf. Alternativ oder zusätzlich kann im Hinblick auf eine sichere Klemmverbindung vorteilhaft vorgesehen sein, dass die Differenz des Außendurchmessers des Antriebsendes zu dem Durchmesser der axialen Bohrung in der Ebene der Nut im Bereich von 1 mm bis 3 mm liegt.

Bei einer ganz besonders vorteilhaften Ausführung ist an dem Antriebsende ein Klemmring mit einer tangential verlaufenden Spannschraube angeordnet, mittels dem der Durchmesser der axialen Bohrung verringerbar ist. Ein solcher Klemmring ermöglicht es, eine Abtriebswelle an die Übertragungswelle anzukoppeln, zeitlich nachdem das Antriebsgehäuse eines Antriebsmotors mit dem Ankoppelvorrichtungsgehäuse verbunden wurde. Hierfür kann das Ankoppelvorrichtungsgehäuse eine, insbesondere radiale oder tangentiale, Öffnung aufweisen, durch die hindurch ein Werkzeug zu einem Kopf der Spannschraube führbar ist.

Vorzugsweise weist der Klemmring ausschließlich eine einzige Spannschraube auf, was eine einfache Montage ermöglicht (insbesondere im Hinblick darauf, dass das Antriebsgehäuse zum Zeitpunkt der Herstellung der Klemmverbindung bereits mit dem Ankoppelvorrichtungsgehäuse verbunden wurde).

Bei einer besonders vorteilhaften Ausführung weist der Klemmring einen einteiligen geschlitzten Ring auf, dessen freie Enden mittels der Spannschraube einander annäherbar sind.

In ganz besonders vorteilhafter Weise wurde erfindungsgemäß erkannt, dass eine besonders zuverlässige Klemmverbindung ermöglicht ist, wenn der Ring aus Aluminium oder aus einer Aluminiumlegierung hergestellt ist. und/oder wenn der Ring überwiegend aus Aluminium besteht. Insbesondere kann vorteilhaft vorgesehen sein, dass der Ring aus einer Aluminiumlegierung gemäß EN AW-7075 besteht. Es hat sich gezeigt, dass mit einem solchen Klemmring eine Klemmverbindung der Abtriebswelle zu der Übertragungswelle herstellbar ist, mittels der ein wesentlich höheres Drehmoment übertragen werden kann, als bei Verwendung eines Klemmrings aus einem anderen Material, insbesondere Stahl, der ansonsten dieselben Abmessungen aufweist.

Bei einer ganz besonders vorteilhaften Ausführung liegt das Verhältnis eines Außendurchmessers des Rings zu einem Innendurchmesser des Rings im Bereich von 1,5 bis 3,0, insbesondere im Bereich von 1,8 bis 2,6. Ein größeres Verhältnis führt nachteiliger Weise zu einem größeren Rotationsträgheitsmoment. Außerdem wird keine bessere Klemmung erreicht, da bei einem größeren Verhältnis die Eigensteifigkeit des Rings, die mittels der Spannschraube überwunden werden muss, überproportional zunimmt.

Vorzugsweise liegt die axiale Breite des Rings im Bereich des 0,4- bis 0,7-fachen des Innendurchmessers des Rings. Dies ermöglicht die Verwendung einer ausreichend dicken Spannschraube, während gleichzeitig nur ein geringer axialer Bauraum benötigt wird.

Bei einer besonders vorteilhaften Ausführung ist das Ankoppelvorrichtungsgehäuse wenigstens in einem Teilabschnitt rotationssymmetrisch ausgebildet. Dies hat den ganz besonderen Vorteil einer besonders kompakten Bauweise. Ebenfalls im Hinblick auf eine möglichst kompakte Bauweise kann das Ankoppelvorrichtungsgehäuse wenigstens in einem Teilabschnitt außen eine Glockenform oder eine Kegelstumpfform aufweisen. Eine solche Form hat den weiteren Vorteil, dass ein einfaches Reinigen ermöglicht ist.

Das Ankoppelvorrichtungsgehäuse kann mehrteilig ausgebildet sein. Insbesondere kann das Ankoppelvorrichtungsgehäuse einen Hauptabschnitt (insbesondere in Glockenform oder eine Kegelstumpfform) und einen daran befestigten Motorflansch aufweisen. Der Motorflansch kann Durchgangsbohrungen und/oder Gewindebohrungen aufweisen.

Hinsichtlich des Materials, aus dem das Ankoppelvorrichtungsgehäuse hergestellt ist, gibt es keine grundsätzlichen Beschränkungen. Allerdings muss das Ankoppelvorrichtungsgehäuse ausreichend stabil ausgebildet sein, um die auftretenden Drehmomente abstützen zu können. Das Ankoppelvorrichtungsgehäuse kann vorteilhaft insbesondere aus Stahl oder aus Titan oder aus Edelstahl oder aus Aluminium hergestellt sein. Insbesondere kann das Ankoppelvorrichtungsgehäuse aus einem Material hergestellt sein, das Stahl oder Titan oder Edelstahl oder Aluminium beinhaltet.

Bei einer ganz besonders vorteilhaften Ausführung ist das Ankoppelvorrichtungsgehäuse wenigstens auf der Außenseite beschichtet oder eloxiert oder brüniert. Eine solche Ausführung ist besonders gut gegen äußere Einflüsse, wie Beschädigung und Verschmutzung, geschützt.

Von ganz besonderem Vorteil ist ein Getriebesystem, das ein Getriebe, insbesondere ein Zykloidgetriebe, und eine erfindungsgemäße Ankoppelvorrichtung beinhaltet. Das Getriebesystem kann vorteilhaft als eine vormontierte und einsatzfertige Baueinheit hergestellt werden, die am Einsatzort montiert werden kann, ohne hierfür Bauteile des Getriebesystems wieder demontieren zu müssen.

Bei einer besonderen Ausführung weist die Übertragungswelle ein Abtriebsende auf, das dazu ausgebildet und bestimmt ist, mit einem Getriebeeingang des Getriebes wirkverkoppelt zu werden. Beispielsweise kann das Abtriebsende eine Verzahnung aufweisen, die mit wenigstens einem Zahnrad des Getriebes in Zahneingriff steht. Insbesondere kann es sich bei dem Getriebe um ein Zykloidgetriebe handeln. Bei einer solchen Ausführung kann vorteilhaft vorgesehen sein, dass eine Außenverzahnung des Abtriebsendes der Übertragungswelle in kämmendem Zahneingriff mit Außenverzahnungen der Exzenterwellen des Zykloidgetriebes steht, wenn die Ankoppelvorrichtung an das Zykloidgetriebe angekoppelt ist. Insbesondere kann die Übertragungswelle vorteilhaft derart ausgebildet und angeordnet sein, dass beim Herstellen einer Verbindung des Ankoppelvorrichtungsgehäuses mit einem Getriebe-Drehmomentabstützelement automatisch, insbesondere nach dem Prinzip einer Steckverbindung, eine Wirkverbindung der Übertragungswelle mit dem Getriebe hergestellt wird.

Vorzugsweise ist die Übertragungswelle mittels wenigstens eines Wälzlagers rotierbar gelagert. Hierdurch ist vorteilhaft eine verlustfreie Drehmomentübertragung gewährleistet.

Von ganz besonderem Vorteil ist ein Antriebssystem, das eine drehmomenteinspeisende Antriebsvorrichtung und ein erfindungsgemäßes Getriebesystem beinhaltet. Die Antriebsvorrichtung kann ein, insbesondere elektrischer, Antriebsmotor sein. Hierbei kann insbesondere vorgesehen sein, dass der Antriebsmotor unmittelbar an die Ankoppelvorrichtung angekoppelt ist.

Alternativ ist es beispielsweise auch möglich, dass die Antriebsvorrichtung einen, insbesondere elektrischen, Antriebsmotor aufweist, der lediglich mittelbar, nämlich beispielsweise über ein weiteres Getriebe, an die Ankoppelvorrichtung angekoppelt ist. Insoweit kann die Antriebsvorrichtung ganz allgemein ein weiteres Getriebe aufweisen, das unmittelbar an die Ankoppelvorrichtung angekoppelt ist. Insbesondere kann die Antriebsvorrichtung ein Getriebemotor sein, der das weitere Getriebe beinhaltet, oder einen Getriebemotor, der das weitere Getriebe aufweist, aufweisen.

Das Antriebssystem kann vorteilhaft als eine vormontierte und einsatzfertige Baueinheit hergestellt werden, die am Einsatzort montiert werden kann, ohne hierfür Bauteile des Antriebssystems wieder demontieren zu müssen.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: in einer Querschnittsdarstellung ein nicht erfindungsgemäßes Getriebesystem samt einem anzutreibenden System und einer drehmomenteinspeisenden Antriebsvorrichtung,
- Fig. 2: das nicht erfindungsgemäße Getriebesystem in einer anderen Querschnittsebene,
- Fig. 3: die Ankoppelvorrichtung 3 des nicht erfindungsgemäße Getriebesystem von außen,
- Fig. 4: in einer Querschnittsdarstellung ein Ausführungsbeispiel eines erfindungsgemäßen Getriebesystems samt einem anzutreibenden System und einer drehmomenteinspeisenden Antriebsvorrichtung,
- Fig. 5: ein erstes Ausführungsbeispiel einer Übertragungswelle einer erfindungsgemäßen Ankoppelvorrichtung,
- Fig. 6: das erste Ausführungsbeispiel einer Übertragungswelle samt einem Klemmring,
- Fig. 7: das erste Ausführungsbeispiel einer Übertragungswelle einer erfindungsgemäßen Ankoppelvorrichtung mit einer Ausgleichshülse,
- Fig. 8: das erste Ausführungsbeispiel einer Übertragungswelle mit einer Ausgleichshülse samt einem Klemmring,
- Fig. 9: ein zweites Ausführungsbeispiel einer Übertragungswelle einer erfindungsgemäßen Ankoppelvorrichtung in einer Querschnittsdarstellung,
- Fig. 10: ein drittes Ausführungsbeispiel einer Übertragungswelle einer erfindungsgemäßen Ankoppelvorrichtung in einer Querschnittsdarstellung,
- Fig. 11: das dritte Ausführungsbeispiel einer Übertragungswelle einer erfindungsgemäßen Ankoppelvorrichtung in einer Querschnittsdarstellung mit einer Ausgleichshülse und
- Fig. 12: ein Ausführungsbeispiel eines Klemmrings für eine erfindungsgemäße Ankoppelvorrichtung.

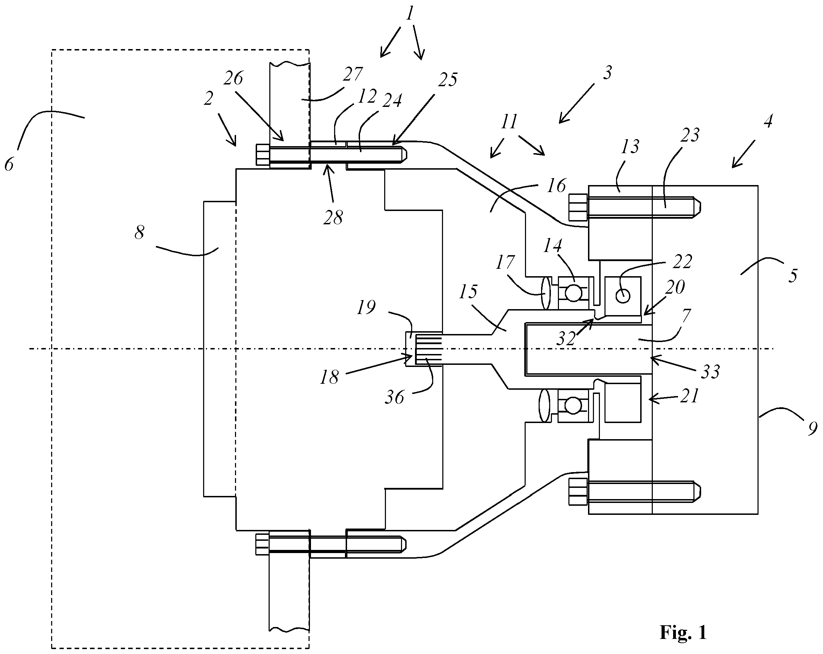

Fig. 1 zeigt in einer Querschnittsdarstellung ein nicht erfindungsgemäßes Getriebesystem 1, das ein Getriebe 2 und ein Ausführungsbeispiel einer erfindungsgemäßen Ankoppelvorrichtung 3 beinhaltet. Das Getriebesystem 1 dient dazu, eine drehmomenteinspeisende Antriebsvorrichtung 4, nämlich in diesem Ausführungsbeispiel einen Antriebsmotor 5, an ein anzutreibendes System 6 anzukoppeln. Hierbei werden genau genommen zwei Wirkverbindungen hergestellt. Zum einen wird über die Übertragungswelle 15 eine (durch das Getriebe 2 untersetzende oder übersetzende) Wirkverbindung einer Abtriebswelle 7 des Antriebsmotors 5 mit einem (nicht dargestellten) Antriebseingang des anzutreibenden Systems 6 hergestellt, wobei der Antriebseingang des anzutreibenden Systems 6 unmittelbar mit einem Getriebeabtrieb 8 des Getriebes 2 wirkverbunden wird. Zum anderen wird hierbei auch eine drehmomentabstützende Verbindung eines Antriebs-Drehmomentabstützelements, nämlich in diesem Ausführungsbeispiel eines Antriebsgehäuses 9 der Antriebsvorrichtung 4 zu einem Drehmomentabstützelement, beispielsweise zu einer Haltevorrichtung 27 oder zu einem Gehäuse, des anzutreibenden Systems 6 hergestellt.

Die Ankoppelvorrichtung 3 weist ein Ankoppelvorrichtungsgehäuse 11 zum drehmomentabstützenden Verbinden eines Getriebe-Drehmomentabstützelements 12 des Getriebes 2 mit dem Antriebsgehäuse 9 der Antriebsvorrichtung 4 auf. Das Ankoppelvorrichtungsgehäuse 11 ist mehrteilig ausgebildet und weist einen (mittels nicht dargestellter Befestigungsschrauben befestigten) Motorflansch 13 auf.

Innerhalb des Ankoppelvorrichtungsgehäuses 11 befindet sich eine mittels eines Wälzlagers 14 rotierbar gelagerte Übertragungswelle 15. Zur Abdichtung des Innenraums 16 der Ankoppelvorrichtung 3 ist zwischen dem Ankoppelvorrichtungsgehäuse 11 und der Übertragungswelle 15 eine Wellendichtung 17 angeordnet.

Die Übertragungswelle 15 weist ein Abtriebsende 18 auf, das mit einem Getriebeeingang 19 des Getriebes 2 wirkverkoppelt ist. Beispielsweise kann das Abtriebsende 18 eine Außenverzahnung 36 aufweisen, die mit wenigstens einem Zahnrad des Getriebes 2 in Zahneingriff steht. Insbesondere kann es sich bei dem Getriebe 2 um ein Zykloidgetriebe handeln. Bei einer solchen Ausführung kann vorteilhaft vorgesehen sein, dass eine Außenverzahnung 36 des Abtriebsendes 18 der Übertragungswelle 15 in kämmendem Zahneingriff mit Außenverzahnungen der Exzenterwellen des Zykloidgetriebes steht.

Die Übertragungswelle 15 weist außerdem ein Antriebsende 20 auf, das dazu ausgebildet und bestimmt ist, kraftschlüssig mit der Abtriebswelle 7 drehfest und kraftschlüssig verbunden zu werden. Hierzu ist das Antriebsende 20 als geschlitzte Hohlwelle (vorzugsweise mit zwei axial verlaufenden Schlitzen, die in der Figur 1 nicht dargestellt sind) ausgebildet, in die die Abtriebswelle 7 eingesteckt und mittels eines Klemmrings 21, der eine Spannschraube 22 aufweist, festgeklemmt werden kann, um eine drehfeste Verbindung herzustellen. Zum Ausbilden der geschlitzten Hohlwelle weist das Antriebsende 20 eine axiale Bohrung 33 auf.

Vorzugsweise weist die axiale Bohrung 33 (vor dem Anziehen der Spannschraube 22) einen Durchmesser im Bereich von x+2/100 bis x+8/100 mm auf, wobei die Abtriebswelle 7 einen Durchmesser von x mm aufweist. Auf diese Weise wird durch das anschließende Anziehen der Spannschraube 22 des Klemmrings 21 eine besonders dauerhafte und sichere Klemmverbindung hergestellt.

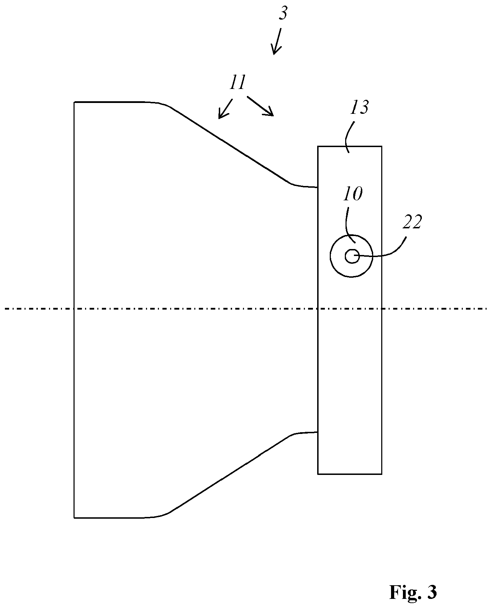

Der Motorflansch 13 weist eine (in Figur 3 dargestellte) tangentiale Öffnung 10 auf, durch die hindurch der Kopf der Spannschraube 22 mit einem Werkzeug, beispielsweise einem Innensechskantschlüssel oder einem Innenvielzahnschlüssel erreichbar ist, um die Klemmverbindung herzustellen, nachdem das Antriebsgehäuse 9 der Antriebsvorrichtung 4 mittels mehrerer Befestigungsschrauben 23 mit dem Motorflansch 13 verbunden wurde.

Das anzutreibende System 6 ist mittels Halteschrauben 24 an dem Getriebesystem 1 befestigt. In dem Ankoppelvorrichtungsgehäuse 11 sind axiale Gewindebohrungen 25 vorhanden sind, in die die Halteschrauben 24 eingeschraubt sind. Die Halteschrauben 24 verlaufen durch flanschartig angeordnete Durchgangsbohrungen 26 einer Haltevorrichtung 27 des anzutreibenden Systems 6 sowie durch entsprechende weitere Durchgangsbohrungen 28 des Getriebe-Drehmomentabstützelements 12.

Die Übertragungswelle 15 weist auf ihrer Außenseite eine umlaufende Nut 32 auf. Die Nut 32 und das Ende der (nicht dargestellten) axialen Schlitze sind in derselben zur Axialrichtung senkrechten Ebene angeordnet.

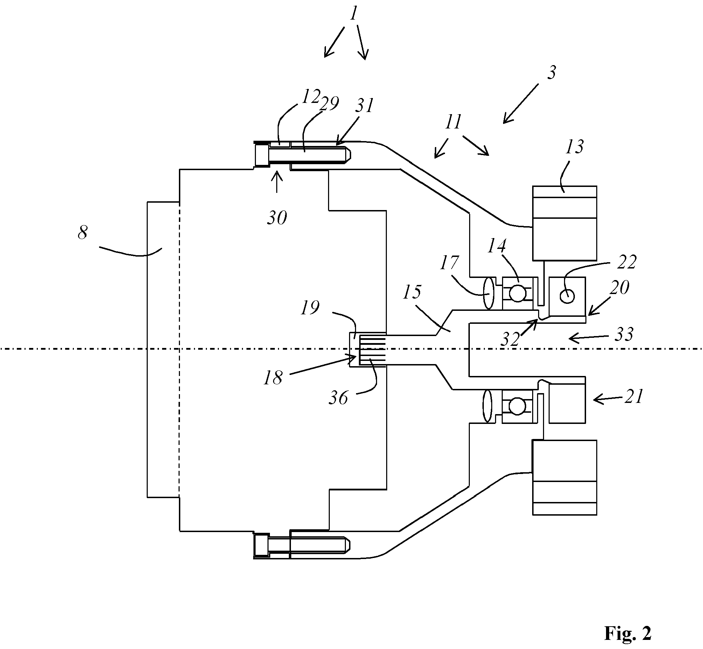

Fig. 2 zeigt das das nicht zur Erfindung gehörende Getriebesystem 1 alleine in einer anderen Drehstellung. Das Getriebe 2 ist mittels mehrerer Verbindungsschrauben 29 an die Ankoppelvorrichtung 1 geschraubt. Die Verbindungsschrauben 29 verlaufen durch weitere Durchgangsbohrungen 30 des flanschartig ausgebildeten Getriebe-Drehmomentabstützelements 12 und sind in Gewindebohrungen 31 des Ankoppelvorrichtungsgehäuses 11 eingeschraubt, wodurch das Getriebe-Drehmomentabstützelement 12 und das Ankoppelvorrichtungsgehäuse 11 drehfest miteinander verbunden sind. Die Gewindebohrungen 31 sind stirnseitig in dem Ankoppelvorrichtungsgehäuse 11 angeordnet und verlaufen in Axialrichtung.

Fig. 3 zeigt die Ankoppelvorrichtung 3 des das nicht zur Erfindung gehörenden Getriebesystems 1 von außen. Es ist in dieser Figur zu erkennen, dass der Motorflansch 13 eine tangentiale Öffnung 10 aufweist, durch die hindurch der Kopf der Spannschraube 22 mit einem Werkzeug, beispielsweise einem Innensechskantschlüssel oder einem Innenvielzahnschlüsselerreichbar ist, um die Klemmverbindung herzustellen, nachdem das Antriebsgehäuse 9 mit dem Motorflansch 13 verbunden wurde. Zum Verschließen der Öffnung 10 kann ein Verschluss, beispielsweise ein in ein Gewinde der Öffnung 10 einschraubbarer Gewindestift, vorhanden sein.

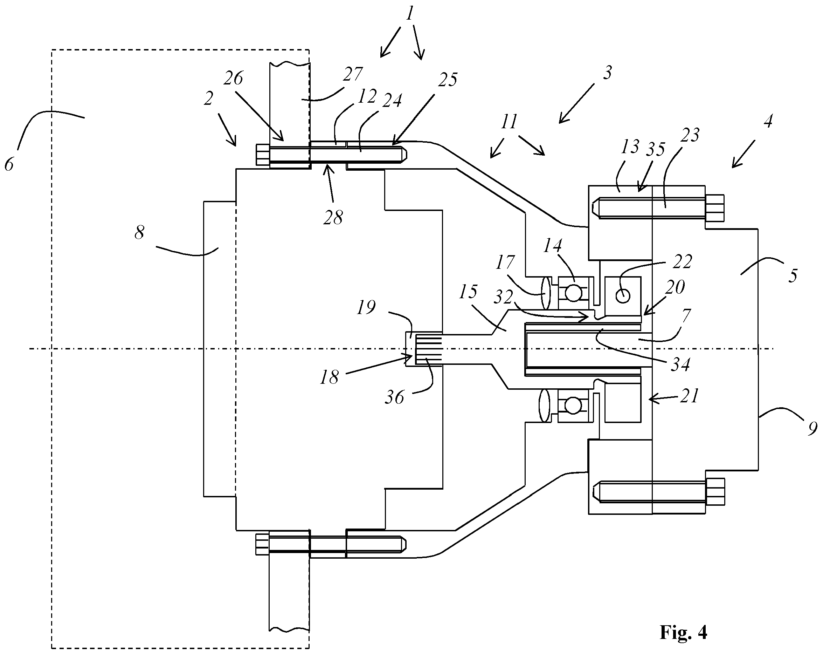

Fig. 4 zeigt in einer Querschnittsdarstellung ein Ausführungsbeispiel eines erfindungsgemäßen Getriebesystems 1 samt einem anzutreibenden System 6 und einer drehmomenteinspeisenden Antriebsvorrichtung 4.

Bei diesem Ausführungsbeispiel ist in die axiale Bohrung 33 eine Ausgleichshülse 34 der Wanddicke y mm eingesteckt. In die Ausgleichshülse 34 ist die Abtriebswelle 7 unmittelbar eingesteckt, wobei vorzugsweise die axiale Bohrung (vor dem Anziehen der Spannschraube 22) einen Durchmesser im Bereich von x+y+2/100 mm bis x+y+8/100 mm aufweist. Auf diese Weise wird durch das anschließende Anziehen der Spannschraube 22 des Klemmrings 21 eine besonders zuverlässige und sichere Klemmverbindung hergestellt.

Bei diesem Ausführungsbeispiel weist der Motorflansch 13 Gewindebohrungen 35 auf, in die die Befestigungsschrauben 23 zum Festlegen des Antriebsgehäuses 9 an dem Ankoppelvorrichtungsgehäuse 11 eingeschraubt sind.

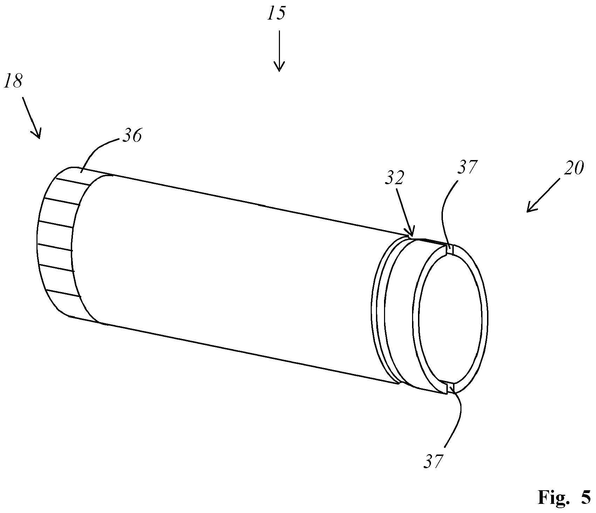

Fig. 5 zeigt ein erstes Ausführungsbeispiel einer Übertragungswelle 15 einer erfindungsgemäßen Ankoppelvorrichtung 3.

Die Übertragungswelle 15 weist ein Abtriebsende 18 auf, das mit einem Getriebeeingang 19 eines Getriebes 2 wirkverkoppelt werden kann. Beispielsweise kann das Abtriebsende 18 eine Außenverzahnung 36 aufweisen.

Die Übertragungswelle 15 weist außerdem ein Antriebsende 20 auf, das dazu ausgebildet und bestimmt ist, kraftschlüssig mit einer Abtriebswelle 7 drehfest und kraftschlüssig verbunden zu werden. Hierzu ist das Antriebsende 20 als geschlitzte Hohlwelle ausgebildet, in die eine Abtriebswelle 7 eingesteckt und mittels eines Klemmrings 21 festgeklemmt werden kann, um eine drehfeste Verbindung herzustellen. Das Antriebsende 20 weist eine axiale Bohrung 33 auf, in die eine Abtriebswelle 7 unter Zwischenschaltung einer Ausgleichshülse 34 eingesteckt werden kann.

Die Übertragungswelle 15 weist auf ihrer Außenseite eine umlaufende Nut 32 auf.

Das Antriebsende 20 weist genau zwei axial verlaufende und an dem freien Ende der Übertragungswelle 15 offene Schlitze 37 auf, die einander radial gegenüberliegend angeordnet sind. Die axial verlaufenden Schlitze 37 beginnen am freien Ende der Übertragungswelle 15 und verlaufen bis in die Nut 32 hinein. Insbesondere kann vorgesehen sein, dass die axial verlaufenden Schlitze 37 am freien Ende der Übertragungswelle 15 beginnen und am tiefsten Punkt der Nut 32 enden.

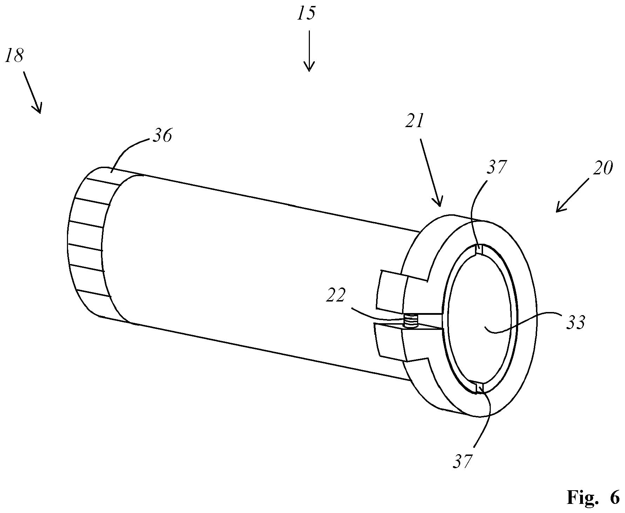

Fig. 6 zeigt das erste Ausführungsbeispiel einer Übertragungswelle 15 samt einem Klemmring 21, der eine Spannschraube 22 aufweist.

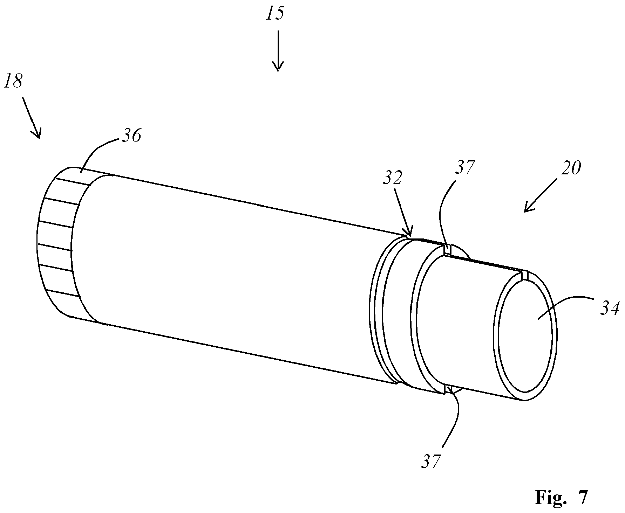

Fig. 7 das erste Ausführungsbeispiel einer Übertragungswelle 15 einer erfindungsgemäßen Ankoppelvorrichtung 3, in das eine Ausgleichshülse 34 eingesteckt wird.

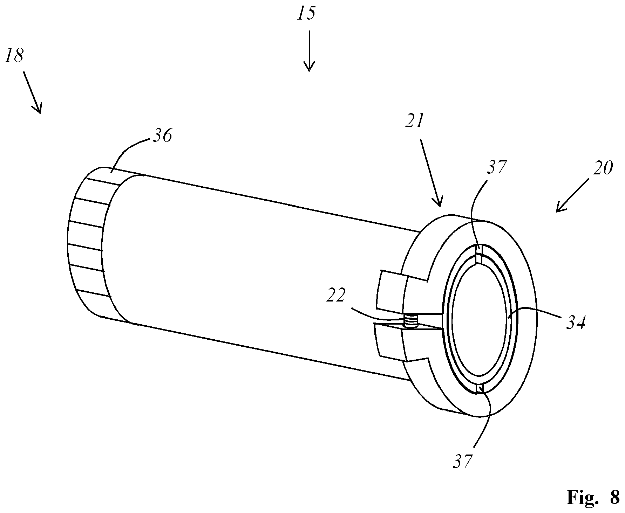

Fig. 8 zeigt das erste Ausführungsbeispiel einer Übertragungswelle 15 samt einem Klemmring 21, der eine Spannschraube 22 aufweist und der vollständig eingesteckten Ausgleichshülse 34.

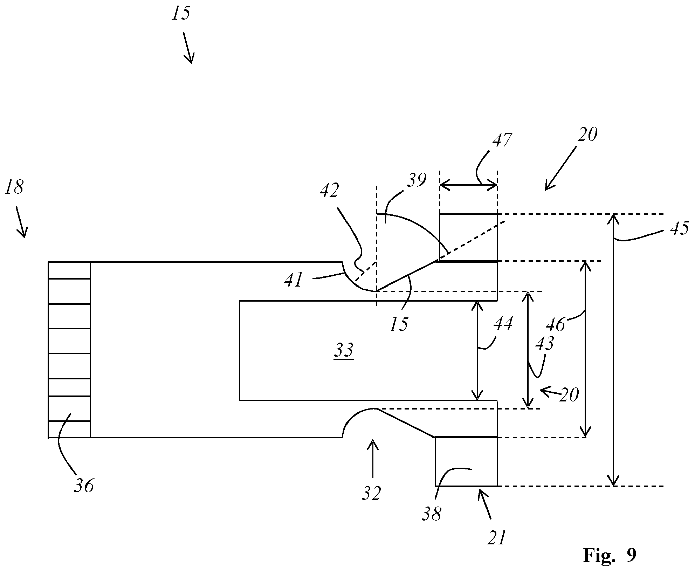

Fig. 9 zeigt ein zweites Ausführungsbeispiel einer Übertragungswelle 15 einer erfindungsgemäßen Ankoppelvorrichtung 3 in einer Querschnittsdarstellung.

Diese Übertragungswelle 15 weist ein Abtriebsende 18 auf, das mit einem Getriebeeingang 19 eines Getriebes 2 wirkverkoppelt werden kann. Beispielsweise kann das Abtriebsende 18 eine Außenverzahnung 36 aufweisen.

Die Übertragungswelle 15 weist außerdem ein Antriebsende 20 auf, das dazu ausgebildet und bestimmt ist, kraftschlüssig mit einer Abtriebswelle 7 drehfest und kraftschlüssig verbunden zu werden. Hierzu ist das Antriebsende 20 als geschlitzte Hohlwelle ausgebildet, in die eine Abtriebswelle 7 eingesteckt und mittels eines Klemmrings 21 festgeklemmt werden kann, um eine drehfeste Verbindung herzustellen. Das Antriebsende 20 weist eine axiale Bohrung 33 auf, in die eine (in dieser Figur nicht dargestellte) Abtriebswelle 7 unter Zwischenschaltung einer Ausgleichshülse 34 eingesteckt werden kann. Der Klemmring 21 weist einen einteiligen geschlitzten Ring 38 auf, dessen freie Enden mittels der (in Figur 9 nicht eingezeichneten) Spannschraube 22 einander annäherbar sind.

Das Antriebsende 20 weist genau zwei axial verlaufende und an dem freien Ende der Übertragungswelle 15 offene Schlitze 37 auf, die einander radial gegenüberliegend angeordnet sind, was in Figur 9 nicht dargestellt ist.

Die Übertragungswelle 15 weist auf ihrer Außenseite eine umlaufende Nut 32 auf. Die umlaufende Nut 32 umgibt die radiale Bohrung 33.

Die umlaufende Nut 32 weist im Querschnitt eine relativ zur Radialrichtung in einem von Null Grad verschiedenen Winkel 39 verlaufende, insbesondere gerade, Flanke 40 auf. Der Winkel 39 liegt im Bereich von 50 Grad bis 70 Grad. Die umlaufende Nut 32 weist im Querschnitt eine weitere, gebogene, insbesondere konkav gebogene, Flanke 41 mit einem Radius 42 auf. Der Radius 42 entspricht der radialen Tiefe der umlaufenden Nut 32. Die umlaufende Nut 32 kann eine radiale Tiefe im Bereich von 1 mm bis 4 mm, insbesondere von 2 mm aufweisen.

Die Differenz des Außendurchmessers 43 des Antriebsendes 20 zu dem Durchmesser 44 der axialen Bohrung 33 liegt im Bereich von 3 mm bis 5 mm.

Das Verhältnis des Außendurchmessers 45 des Rings 38 zu einem Innendurchmesser 46 des Rings 38 liegt im Bereich von 1,5 bis 3,0, insbesondere im Bereich von 1,8 bis 2,6. Insbesondere kann der Außendurchmesser vorteilhaft im Bereich von 30 mm bis 90 mm liegen.

Die axiale Breite 47 des Rings 38 liegt vorzugsweise im Bereich des 0,4- bis 0,7-fachen des Innendurchmesser 46 des Rings 38. Dies ermöglicht die Verwendung einer ausreichend dicken Spannschraube, während gleichzeitig nur ein geringer axialer Bauraum benötigt wird.

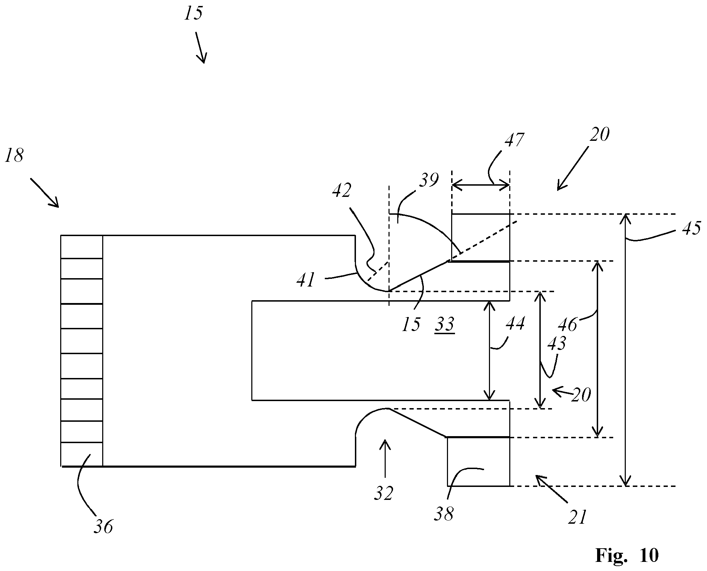

Fig. 10 zeigt ein drittes Ausführungsbeispiel einer Übertragungswelle 15 einer erfindungsgemäßen Ankoppelvorrichtung 3 in einer Querschnittsdarstellung. Die Übertragungswelle 15 unterscheidet sich von der in Figur 9 dargestellten Übertragungswelle 15 dadurch, dass das Abtriebsende 18 einen größeren Außendurchmesser aufweist als das Antriebsende 20.

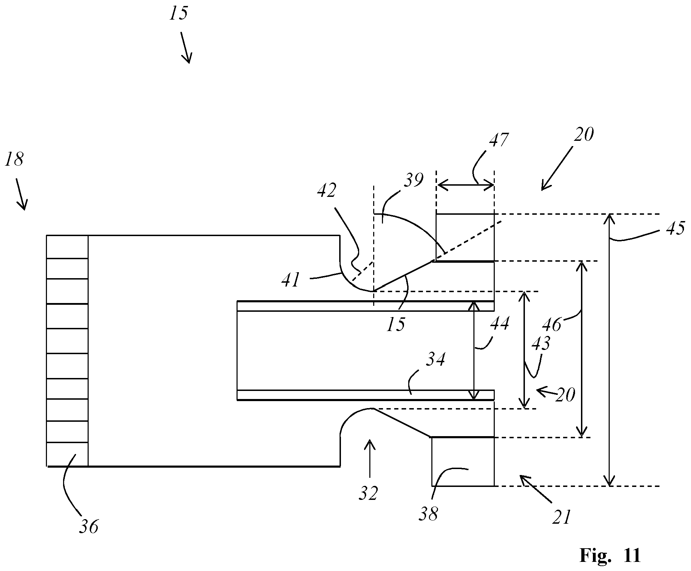

Fig. 11 zeigt das dritte Ausführungsbeispiel einer Übertragungswelle 15 einer erfindungsgemäßen Ankoppelvorrichtung 3 in einer Querschnittsdarstellung, wobei in die Bohrung 33 eine, vorzugsweise geschlitzte, Ausgleichshülse 34 eingesteckt ist.

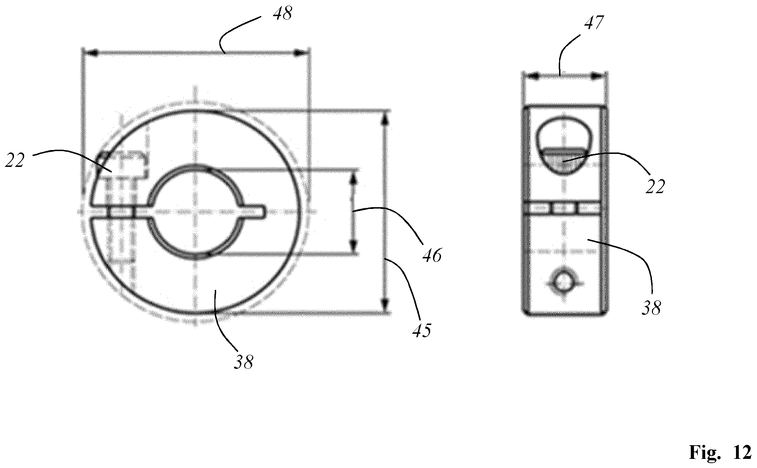

Fig. 12 zeigt ein Ausführungsbeispiel eines Klemmrings 21 für eine erfindungsgemäße Ankoppelvorrichtung 3.

Der Klemmring 21 weist einen einteiligen geschlitzten Ring 38 auf, dessen freie Enden mittels der Spannschraube 22 einander annäherbar sind.

Das Verhältnis des Außendurchmessers 45 des Rings 38 zu einem Innendurchmesser 46 des Rings 38 liegt im Bereich von 1,5 bis 3,0, insbesondere im Bereich von 1,8 bis 2,6. Insbesondere kann der Außendurchmesser vorteilhaft im Bereich von 30 mm bis 90 mm liegen.

Die axiale Breite 47 des Rings 38 liegt vorzugsweise im Bereich des 0,4- bis 0,7-fachen des Innendurchmesser 46 des Rings 38. Dies ermöglicht die Verwendung einer ausreichend dicken Spannschraube, während gleichzeitig nur ein geringer axialer Bauraum benötigt wird.

Das Maß 48 gibt den Durchmesser eines zu dem Ring 38 konzentrischen (gestrichelt eingezeichneten) Kreises an, der den hervorstehenden Kopf der Spannschraube 22 berührt. Das Maß 48 ist geringfügig größer als der Außendurchmesser 45 des Rings 38.

### Bezugszeichenliste:

- 1: Getriebesystem
- 2: Getriebe
- 3: Ankoppelvorrichtung
- 4: drehmomenteinspeisende Antriebsvorrichtung
- 5: Antriebsmotor
- 6: anzutreibendes System
- 7: Abtriebswelle
- 8: Getriebeabtrieb
- 9: Antriebsgehäuse
- 10: Öffnung
- 11: Ankoppelvorrichtungsgehäuse
- 12: Getriebe-Drehmomentabstützelement
- 13: Motorflansch
- 14: Wälzlager
- 15: Übertragungswelle
- 16: Innenraum der Ankoppelvorrichtung 3
- 17: Wellendichtung
- 18: Abtriebsende
- 19: Getriebeeingang
- 20: Antriebsende
- 21: Klemmring
- 22: Spannschraube
- 23: Befestigungsschraube
- 24: Halteschraube
- 25: Gewindebohrung
- 26: Durchgangsbohrung
- 27: Haltevorrichtung
- 28: Durchgangsbohrung
- 29: Verbindungsschraube
- 30: Weitere Durchgangsbohrung
- 31: Gewindebohrung
- 32: Nut
- 33: axiale Bohrung
- 34: Ausgleichshülse
- 35: Gewindebohrung
- 36: Außenverzahnung
- 37: Schlitz
- 38: Ring
- 39: Winkel
- 40: Flanke
- 41: weitere Flanke
- 42: Radius
- 43: Außendurchmessers des Antriebsendes 20
- 44: Durchmesser der axialen Bohrung 33
- 45: Außendurchmessers des Rings 38
- 46: Innendurchmesser des Rings 38
- 47: axiale Breite des Rings 38
- 48: Maß

## Patentansprüche

1. Ankoppelvorrichtung (3) zum drehmomentübertragenden Ankoppeln einer drehmomenteinspeisenden Antriebsvorrichtung (4), insbesondere eines Antriebsmotors (5), die eine Abtriebswelle (7) aufweist, an ein Getriebe (2), insbesondere an ein Zykloidgetriebe, wobei die Ankoppelvorrichtung (3) ein Ankoppelvorrichtungsgehäuse (11) zur drehmomentabstützenden Verbindung eines Getriebe-Drehmomentabstützelements (12), insbesondere eines Getriebegehäuses, des Getriebes (2) mit einem Antriebs-Drehmomentabstützelement der Antriebsvorrichtung (4), insbesondere einem Antriebsgehäuse (9), sowie eine innerhalb des Ankoppelvorrichtungsgehäuses (11) rotierbar gelagerte Übertragungswelle (15) mit einem Antriebsende (20) aufweist, das dazu ausgebildet und bestimmt ist, mit einem Endabschnitt einer Abtriebswelle (7) einer drehmomenteinspeisenden Antriebsvorrichtung (4) drehfest verbunden zu werden, wobei die gesamte Ankoppelvorrichtung (3) als fertig montierte und funktionsfähige Baueinheit an eine drehmomenteinspeisende Antriebsvorrichtung (4) ankoppelbar ist, ohne hierfür Teile der Ankoppelvorrichtung (3) demontieren zu müssen, wobei das Antriebsende (20) als eine geschlitzte Hohlwelle mit einer axialen Bohrung (33) ausgebildet ist und dazu ausgebildet ist, kraftschlüssig, insbesondere ausschließlich kraftschlüssig, mit der Abtriebswelle (7) einer drehmomenteinspeisenden Antriebsvorrichtung (4) verbunden zu werden, und dass die Ankoppelvorrichtung (3) einen Klemmring (21) mit einer tangential verlaufenden Spannschraube (22) aufweist, der an dem Antriebsende (20) angeordnet ist und mittels dem der Durchmesser der axialen Bohrung (33) verringerbar ist, **dadurch gekennzeichnet, dass** der Klemmring (21) einen einteiligen geschlitzten Ring (38) aufweist, dessen freie Enden mittels der Spannschraube einander annäherbar sind und der aus Aluminium oder aus einer Aluminiumlegierung hergestellt ist und/oder der überwiegend aus Aluminium besteht, und dass das Antriebsende (20) dazu ausgebildet und bestimmt ist, mit einer Abtriebswelle (7) einer drehmomenteinspeisenden Antriebsvorrichtung (4), die einen Durchmesser von x mm aufweist, drehfest verbunden zu werden und dass in die axiale Bohrung (33) eine Ausgleichshülse (34) der Wanddicke y mm eingesteckt ist, in die die Abtriebswelle (7) unmittelbar einsteckbar ist, wobei die axiale Bohrung (33) einen Durchmesser im Bereich von x+y+2/100 mm bis x+y+8/100 mm aufweist.

2. Ankoppelvorrichtung (3) nach Anspruch 1, **dadurch gekennzeichnet, dass**
a. die Differenz des Außendurchmessers des Antriebsendes (20) zu dem Durchmesser der axialen Bohrung (33) im Bereich von 3 mm bis 5 mm liegt, und/oder dass
b. das Antriebsende (20) wenigstens zwei axial verlaufende Schlitze (37) aufweist, oder dass das Antriebsende (20) genau zwei axial verlaufende Schlitze (37) aufweist, die einander radial gegenüberliegend angeordnet sind, und/oder dass
c. das Antriebsende (20) wenigstens zwei axial verlaufende Schlitze (37) aufweist, die axial genauso lang sind, wie die axiale Bohrung.

3. Ankoppelvorrichtung (3) nach Anspruch 1 oder 2, **dadurch gekennzeichnet, dass** y im Bereich von 1 mm bis 5 mm, insbesondere im Bereich von 2 mm bis 4 mm, liegt.

4. Ankoppelvorrichtung (3) nach einem der Ansprüche 1 bis 3, **dadurch gekennzeichnet, dass** die Übertragungswelle (15) auf ihrer Außenseite eine umlaufende Nut (32) aufweist.

5. Ankoppelvorrichtung (3) nach Anspruch 4, **dadurch gekennzeichnet, dass**
a. die umlaufende Nut (32) axial angrenzend an die Schlitze angeordnet ist oder dass die Schlitze axial in die umlaufende Nut (32) ragen, und/oder dass
b. die umlaufende Nut (32) im Querschnitt halbkreisförmig ausgebildet ist, und/oder dass
c. die umlaufende Nut (32) im Querschnitt eine relativ zur Radialrichtung in einem von Null Grad verschiedenen Winkel (39), insbesondere in einem Winkel im Bereich von 50 Grad bis 70 Grad oder in einem Winkel von 60 Grad, verlaufende, insbesondere gerade, Flanke (40) aufweist, und/oder dass
d. die umlaufende Nut (32) eine radiale Tiefe im Bereich von 1 mm bis 4 mm, insbesondere von 2 mm aufweist, und/oder dass
e. die Differenz des Außendurchmessers des Antriebsendes (20) zu dem Durchmesser (44) der axialen Bohrung (33) in der Ebene der Nut (32), insbesondere an der tiefsten Stelle der Nut (32), im Bereich von 1 mm bis 3 mm liegt.

6. Ankoppelvorrichtung (3) nach einem der Ansprüche 1 bis 5, **dadurch gekennzeichnet, dass** das Ankoppelvorrichtungsgehäuse (11) eine, insbesondere radiale oder tangentiale, Öffnung aufweist, durch die hindurch ein Werkzeug zu einem Kopf der Spannschraube (22) führbar ist.

7. Ankoppelvorrichtung (3) nach einem der Ansprüche 1 bis 6, **dadurch gekennzeichnet, dass** der Ring (38) aus einer Aluminiumlegierung gemäß EN AW-7075 besteht.

8. Ankoppelvorrichtung (3) nach einem der Ansprüche 1 bis 7, **dadurch gekennzeichnet, dass** das Verhältnis eines Außendurchmessers (45) des Rings (38) zu einem Innendurchmesser (46) des Rings (38) im Bereich von 1,5 bis 3,0, insbesondere im Bereich von 1,8 bis 2,6 liegt.

9. Ankoppelvorrichtung (3) nach einem der Ansprüche 1 bis 8, **dadurch gekennzeichnet, dass** die axiale Breite (47) des Rings (38) im Bereich des 0,4- bis 0,7-fachen des Innendurchmesser (46) des Rings (38) liegt.

10. Ankoppelvorrichtung (3) nach einem der Ansprüche 1 bis 9, **dadurch gekennzeichnet, dass** der Klemmring (21) auf das Antriebsende (20) aufgesteckt ist und/oder dass der Klemmring (21) koaxial zu dem Antriebsende (20) angeordnet ist.

11. Ankoppelvorrichtung (3) nach einem der Ansprüche 1 bis 10, **dadurch gekennzeichnet, dass** die Übertragungswelle (15) mittels wenigstens eines Wälzlagers (14) rotierbar gelagert ist, und/oder dass das Abtriebsende (18) der Übertragungswelle (15) als Vollwelle ausgebildet ist.

12. Getriebesystem (1), das eine Ankoppelvorrichtung (3) nach einem der Ansprüche 1 bis 11 und das Getriebe (2), insbesondere Zykloidgetriebe, beinhaltet.

13. Antriebssystem, das eine drehmomenteinspeisende Antriebsvorrichtung (4) und das Getriebesystem (1) nach Anspruch 12 beinhaltet.

14. Antriebssystem nach Anspruch 13, **dadurch gekennzeichnet, dass** die Antriebsvorrichtung (4) ein, insbesondere elektrischer, Antriebsmotor ist oder dass die die Antriebsvorrichtung (4) einen, insbesondere elektrischen, Antriebsmotor aufweist, oder dass die Antriebsvorrichtung (4) ein Getriebemotor ist oder einen Getriebemotor aufweist.

## Claims

1. Coupling device (3) for torque-transmitting coupling of a torque-input drive device (4), in particular a drive motor (5), which has an output shaft (7), to a transmission (2), in particular to a cycloid transmission, wherein the coupling device (3) has a coupling device housing (11) for torque-supporting connection of a transmission torque-supporting element (12), in particular a transmission housing, of the transmission (2) to a drive torque-supporting element of the drive device (4), in particular to a drive housing (9), and a transmission shaft (15), which is mounted rotatably within the coupling device housing (11) and has a drive end (20) which is designed and intended to be connected, for conjoint rotation, to an end portion of an output shaft (7) of a torque-input drive device (4), wherein the entire coupling device (3) can be coupled as a ready-mounted and functional constructional unit to a torque-input drive device (4) without having to remove parts of the coupling device (3) for this purpose, wherein the drive end (20) is designed as a slotted hollow shaft with an axial bore (33) and is designed to be connected with a force fit, in particular exclusively with a force fit, to the output shaft (7) of a torque-input drive device (4), and the coupling device (3) has a clamping ring (21) with a tangentially running clamping screw (22), which clamping ring is arranged at the drive end (20) and by means of which the diameter of the axial bore (33) can be reduced, **characterized in that** the clamping ring (21) has a single-part, slotted ring (38), the free ends of which can be brought closer together by means of the clamping screw and which is produced from aluminium or from an aluminium alloy and/or which is predominantly composed of aluminium, and **in that** the drive end (20) is designed and intended to be connected, for conjoint rotation, to an output shaft (7) of a torque-input drive device (4), which has a diameter of x mm, and **in that** a compensating sleeve (34) of wall thickness y mm is inserted into the axial bore (33), into which compensating sleeve the output shaft (7) is directly insertable, wherein the axial bore (33) has a diameter in the range of x+y+2/100 mm to x+y+8/100 mm.

2. Coupling device (3) according to Claim 1, **characterized in that**
a. the difference of the outside diameter of the drive end (20) from the diameter of the axial bore (33) lies in the range of 3 mm to 5 mm, and/or **in that**
b. the drive end (20) has at least two axially running slots (37), or **in that** the drive end (20) has precisely two axially running slots (37), which are arranged radially opposite each other, and/or **in that**
c. the drive end (20) has at least two axially running slots (37) which are axially the same length as the axial bore.

3. Coupling device (3) according to Claim 1 or 2, **characterized in that**
y lies in the range of 1 mm to 5 mm, in particular in the range of 2 mm to 4 mm.

4. Coupling device (3) according to one of Claims 1 to 3, **characterized in that** the transmission shaft (15) has a circumferential groove (32) on its outer side.

5. Coupling device (3) according to Claim 4, **characterized in that**
a. the circumferential groove (32) is arranged axially adjacent to the slots, or **in that** the slots project axially into the circumferential groove (32), and/or in that
b. the circumferential groove (32) is semicircular in cross section, and/or **in that**
c. the circumferential groove (32) has, in cross section, an, in particular straight, flank (40) running relative to the radial direction at an angle (39) which is different from zero degrees, in particular at an angle in the range of 50 degrees to 70 degrees or at an angle of 60 degrees, and/or in that
d. the circumferential groove (32) has a radial depth in the range of 1 mm to 4 mm, in particular of 2 mm, and/or **in that**
e. the difference of the outside diameter of the drive end (20) from the diameter (44) of the axial bore (33) in the plane of the groove (32), in particular at the deepest point of the groove (32), lies in the range of 1 mm to 3 mm.

6. Coupling device (3) according to one of Claims 1 to 5, **characterized in that** the coupling device housing (11) has an, in particular radial or tangential, opening through which a tool can be guided to a head of the clamping screw (22).

7. Coupling device (3) according to one of Claims 1 to 6, **characterized in that** the ring (38) is composed of an EN AW-7075 aluminium alloy.

8. Coupling device (3) according to one of Claims 1 to 7, **characterized in that** the ratio of an outside diameter (45) of the ring (38) to an inside diameter (46) of the ring (38) lies in the range of 1.5 to 3.0, in particular in the range of 1.8 to 2.6.

9. Coupling device (3) according to one of Claims 1 to 8, **characterized in that** the axial width (47) of the ring (38) lies in the range of 0.4 to 0.7 times the inside diameter (46) of the ring (38).

10. Coupling device (3) according to one of Claims 1 to 9, **characterized in that** the clamping ring (21) is placed onto the drive end (20), and/or **in that** the clamping ring (21) is arranged coaxially with respect to the drive end (20).

11. Coupling device (3) according to one of Claims 1 to 10, **characterized in that** the transmission shaft (15) is mounted rotatably by means of at least one rolling bearing (14), and/or **in that** the output end (18) of the transmission shaft (15) is designed as a solid shaft.

12. Transmission system (1) which contains a coupling device (3) according to one of Claims 1 to 11 and the transmission (2), in particular cycloid transmission.

13. Drive system which contains a torque-input drive device (4) and the transmission system (1) according to Claim 12.

14. Drive system according to Claim 13, **characterized in that** the drive device (4) is an, in particular electric, drive motor, or **in that** the drive device (4) has an, in particular electric, drive motor, or in that the drive device (4) is a geared motor or has a geared motor.

## Revendications

1. Dispositif de couplage (3) pour le couplage, avec transmission de couple, d'un dispositif d'entraînement (4) d'alimentation en couple, en particulier d'un moteur d'entraînement (5), qui présente un arbre d'entraînement (7), à une transmission (2), en particulier à une transmission cycloïdale, le dispositif de couplage (3) comprenant un boîtier (11) de dispositif de couplage pour la liaison de support de couple d'un élément (12) de support de couple de transmission, en particulier d'un boîtier de transmission, de la transmission (2) avec un élément de support de couple d'entraînement du dispositif d'entraînement (4), en particulier un boîtier d'entraînement (9), ainsi qu'un arbre de transmission (15) logé de manière rotative à l'intérieur du boîtier (11) de dispositif de couplage et comportant une extrémité d'entraînement (20) qui est conçue pour, et destinée à, être reliée de manière solidaire en rotation à une section d'extrémité d'un arbre d'entraînement (7) d'un dispositif d'entraînement (4) d'alimentation en couple, l'ensemble du dispositif de couplage (3) étant apte à être couplé, en tant qu'unité entièrement montée et fonctionnelle, à un dispositif d'entraînement (4) d'alimentation en couple, sans devoir pour cela démonter des parties du dispositif de couplage (3), l'extrémité d'entraînement (20) étant réalisée sous la forme d'un arbre creux fendu avec un alésage axial (33) et étant conçue de manière à être reliée par friction, en particulier exclusivement par friction, à l'arbre d'entraînement (7) d'un dispositif d'entraînement (4) d'alimentation en couple, et en ce que le dispositif de couplage (3) présente un anneau de serrage (21) avec une vis de serrage (22) s'étendant tangentiellement, qui est agencée sur l'extrémité d'entraînement (20) et au moyen de laquelle le diamètre de l'alésage axial (33) est apte à être réduit, **caractérisé en ce que** l'anneau de serrage (21) présente un anneau fendu (38) d'une seule pièce, dont les extrémités libres sont aptes à être rapprochées l'une de l'autre au moyen de la vis de serrage et qui est fabriquée en aluminium ou en un alliage d'aluminium et/ou qui se compose principalement d'aluminium, et **en ce que** l'extrémité d'entraînement (20) est conçue pour, et destinée à, être reliée à un arbre d'entraînement (7) d'un dispositif d'entraînement (4) d'alimentation en couple de rotation, qui présente un diamètre de x mm, et **en ce que** dans l'alésage axial (33) est insérée une douille de compensation (34) d'une épaisseur de paroi de y mm, dans laquelle l'arbre d'entraînement (7) est apte à être directement inséré, l'alésage axial (33) présentant un diamètre compris entre x+y+2/100 mm et x+y+8/100 mm.

2. Dispositif de couplage (3) selon la revendication 1, **caractérisé en ce que**
a. la différence entre le diamètre extérieur de l'extrémité d'entraînement (20) et le diamètre de l'alésage axial (33) est compris entre 3 mm et 5 mm, et/ou **en ce que**
b. l'extrémité d'entraînement (20) présente au moins deux fentes (37) s'étendant axialement, ou **en ce que** l'extrémité d'entraînement (20) présente exactement deux fentes (37) s'étendant axialement, qui sont agencées radialement l'une en face de l'autre, et/ou en ce que
c. l'extrémité d'entraînement (20) présente au moins deux fentes (37) s'étendant axialement, qui sont axialement aussi longues que l'alésage axial.

3. Dispositif de couplage (3) selon la revendication 1 ou la revendication 2, **caractérisé en ce que** y est compris entre 1 mm et 5 mm, en particulier compris entre 2 mm et 4 mm.

4. Dispositif de couplage (3) selon l'une des revendications 1 à 3, **caractérisé en ce que** l'arbre de transmission (15) présente une rainure périphérique (32) sur sa face extérieure.

5. Dispositif de couplage (3) selon la revendication 4, **caractérisé en ce que**
a. la rainure périphérique (32) est agencée axialement de manière adjacente aux fentes ou de telle sorte que les fentes font saillie axialement dans la rainure périphérique (32), et/ou **en ce que**
b. la rainure périphérique (32) est de forme semi- circulaire en section transversale, et/ou **en ce que**
c. la rainure périphérique (32) présente en section transversale un flanc (40), en particulier droit, s'étendant par rapport à la direction radiale selon un angle (39) différent de zéro degré, en particulier selon un angle compris entre 50 degrés et 70 degrés ou selon un angle de 60 degrés, et/ou **en ce que**
d. la rainure périphérique (32) présente une profondeur radiale comprise entre 1 mm et 4 mm, en particulier de 2 mm, et/ou **en ce que**
e. la différence entre le diamètre extérieur de l'extrémité d'entraînement (20) et le diamètre (44) de l'alésage axial (33) dans le plan de la rainure (32), en particulier à l'endroit le plus profond de la rainure (32), est compris entre 1 mm et 3 mm.

6. Dispositif de couplage (3) selon l'une des revendications 1 à 5, **caractérisé en ce que** le boîtier (11) de dispositif de couplage présente une ouverture, notamment radiale ou tangentielle, à travers laquelle un outil est apte à être guidé vers une tête de la vis de serrage (22).

7. Dispositif de couplage (3) selon l'une des revendications 1 à 6, **caractérisé en ce que** l'anneau (38) est en alliage d'aluminium selon EN AW-7075.

8. Dispositif de couplage (3) selon l'une des revendications 1 à 7, **caractérisé en ce que** le rapport entre un diamètre extérieur (45) de l'anneau (38) et un diamètre intérieur (46) de l'anneau (38) est compris entre 1,5 et 3,0, notamment entre 1,8 et 2,6.

9. Dispositif de couplage (3) selon l'une des revendications 1 à 8, **caractérisé en ce que** la largeur axiale (47) de l'anneau (38) est comprise entre 0,4 et 0,7 fois le diamètre intérieur (46) de l'anneau (38).

10. Dispositif de couplage (3) selon l'une des revendications 1 à 9, **caractérisé en ce que** l'anneau de serrage (21) est emmanchée sur l'extrémité d'entraînement (20) et/ou **en ce que** l'anneau de serrage (21) est agencée coaxialement à l'extrémité d'entraînement (20).

11. Dispositif de couplage (3) selon l'une des revendications 1 à 10, **caractérisé en ce que** l'arbre de transmission (15) est monté rotatif au moyen d'au moins un palier à roulement (14), et/ou **en ce que** l'extrémité de sortie (18) de l'arbre de transmission (15) est réalisée sous forme d'arbre plein.

12. Système de transmission (1) qui comprend un dispositif de couplage [3] selon l'une des revendications 1 à 11 et la transmission (2), en particulier la transmission cycloïde.

13. Système d'entraînement qui comprend un dispositif d'entraînement (4) d'alimentation en couple et le système de transmission (1) selon la revendication 12.

14. Système d'entraînement selon la revendication 13, **caractérisé en ce que** le dispositif d'entraînement (4) est un moteur d'entraînement, notamment électrique, ou en ce que le dispositif d'entraînement (4) comporte un moteur d'entraînement, notamment électrique, ou **en ce que** le dispositif d'entraînement (4) est un motoréducteur ou comprend un motoréducteur.
